# EUROPÄISCHE PATENTSCHRIFT

(11) **EP 3 624 284 B1**
(45) Veröffentlichungstag und Bekanntmachung des Hinweises auf die Patenterteilung: **13.04.2022**
(21) Anmeldenummer: 19190457.2
(22) Anmeldetag: 07.08.2019
(51) Int. Cl.: H02G 3/08, E04B 1/76, G02B 6/44, G02B 6/50, E04F 21/08, F16L 5/02, G02B 6/42, G02B 6/52

(54) **VORRICHTUNG ZUM DURCHFÜHREN EINER SPEEDPIPE DURCH EINE WANDBOHRUNG**
DEVICE FOR GUIDING A SPEEDPIPE THROUGH A WALL OPENING
DISPOSITIF DE PASSAGE D'UN SPEEDPIPE À TRAVERS UN TROU DANS UN MUR

(30) Priorität: 14.09.2018 DE 102018007251
(43) Veröffentlichungstag der Anmeldung: 18.03.2020
(73) Patentinhaber: Langmatz GmbH, 82467 Garmisch-Partenkirchen (DE)
(72) Erfinder:
(74) Vertreter: Flosdorff, Jürgen

(56) Entgegenhaltungen:
- EP-A2- 3 217 057
- DE-A1-102010 026 082
- DE-U1-202010 010 920

## Beschreibung

Die Erfindung betrifft eine Vorrichtung zum Durchführen einer Leitung durch eine durch eine Gebäudewand führende Wandbohrung, mit einem die Bohrung an der Gebäudeaußenseite überdeckenden, an der Gebäudewand anliegenden äußeren Klemmkörper, der ein Loch zum Durchführen der Leitung hat, und mit einem die Bohrung an der Gebäudeinnenseite überdeckenden, an der Gebäudewand anliegenden inneren Klemmkörper, durch den die Leitung ebenfalls hindurchführbar ist, wobei beide Klemmkörper Mittel zum Festklemmen der durch sie hindurchgeführten Leitung haben.

Aus der EP 2 410 222 A1 ist eine Vorrichtung zum Befestigen und Abdichten einer durch eine Wandöffnung einer Gebäudewand führenden Leitung bekannt, wobei es sich bei der Leitung um ein Leerrohr handelt, das beispielsweise ein Wasserrohr, ein Gasrohr oder eine Telekommunikationsleitung aufnimmt. Dieses Leerrohr erfordert eine Wandbohrung bzw. Kernlochbohrung eines Durchmessers von wenigstens 40mm, deren Ausbildung mit einem beträchtlichen Aufwand verbunden ist.

Die vorliegende Erfindung sieht dagegen vor, dass eine Speedpipe ohne ein derartiges größeres Leerrohr oder Schutzrohr durch die Wandbohrung hindurchgeführt werden soll, wobei die Speedpipe meist einen Durchmesser von 7 mm, 10 mm oder 12 mm hat, so dass die Wandbohrung nur einen Durchmesser von etwa 20 bis 25 mm haben muss.

Wenn eine derartige Leitung in ein Gebäude eingeführt wird, muss sie in der Wand mechanisch befestigt werden, und der Zwischenraum zwischen der Leitung und der Wand muss gegen den Durchtritt von Wasser und möglichst auch Gas abgedichtet werden. Hierzu ist es aus der EP 2 410 222 A1 bekannt, das Leerrohr mit einem Lochrohr größeren Durchmessers zu umgeben. In dieses Lochrohr wird gemäß der EP 2 410 222 A1 eine zunächst fließfähige, dann aufschäumende und erhärtende Füllsubstanz eingefüllt, die aus einer Vielzahl von über den Umfang verteilten kleinen Löchern aus den umgebenden Rohr austritt und Hohlräume in der Wandbohrung ausfüllt, so dass der Zwischenraum der Wandbohrung abgedichtet wird.

Die EP 3 217 057 A2 offenbart eine Vorrichtung zum Durchführen beispielsweise eines Leerrohrs durch eine durch eine Gebäudewand führende Wandbohrung. Die Vorrichtung hat einen die Bohrung an der Gebäudeaußenseite überdeckenden, an der Gebäudewand anliegenden äußeren Klemmkörper, der ein Loch zum Durchführen einer Leitung hat, und einen an der Gebäudeinnenseite die Bohrung überdeckenden, an der Gebäudewand anliegenden inneren Klemmkörper, durch den die Leitung hindurchführbar ist, wobei beide Klemmkörper Mittel zum Festklemmen der durch sie hindurchgeführten Leitung haben. Mit dem äußeren Klemmkörper ist an dessen Innenseite eine Verteilermanschette verbunden, die radiale Durchlasslöcher für ein Dichtungsmittel haben kann. Wie die Figuren zeigen, liegen die Klemmkörper bei horizontal durch die Gebäudewand führender Bohrung dicht an der Gebäudewand an. Da die Klemmkörper aus Kunststoff bestehen, ist davon auszugehen, dass die Klemmkörper auch bei einer geringen Neigung der Wandbohrung dicht an die Gebäudewand anpressbar sind.

Da die Wandbohrung zum Durchführen einer Speedpipe gemäß der vorliegenden Erfindung nur einen verhältnismäßig kleinen Durchmesser hat, kann diese Wandbohrung durch eine Handbohrmaschine hergestellt werden, was mit einem verringerten Arbeitsaufwand verbunden ist. Dieser von Hand ausgeführte Vorgang führt allerdings dazu, dass der Verlauf der Bohrung durch die Wand variieren kann. Die Bohrung kann sowohl horizontal als auch in einem variierenden Winkel zur Horizontalen verlaufen, wobei letzteres stets dann der Fall ist, wenn das Gebäude keinen Keller hat, so dass dann die Bohrung von außen nach innen schräg nach oben verläuft.

Bei den bisherigen Vorrichtungen zum Durchführen einer Leitung durch eine Gebäudewand müssen für den verschiedenen Verlauf der Wandbohrung angepasste Klemmkörper bereitgestellt werden, die dicht an die Wand anpressbar sind.

Der vorliegenden Erfindung liegt die Aufgabe zugrunde, eine Vorrichtung der betrachteten Art anzugeben, die sowohl zum Befestigen und Abdichten einer horizontalen Wandbohrung als auch einer schräg verlaufenden Wandbohrung verwendbar ist.

Diese Aufgabe wird durch eine Vorrichtung nach Anspruch 1 gelöst.

Der innere Klemmkörper besteht bevorzugt aus einem thermoplastischen Kunststoff, der an definierten Stellen bevorzugt mit geringerer Wandstärke derart verformbar bzw. biegbar ist, dass der innere Klemmkörper sowohl bei horizontaler als auch schräg durch die Gebäudewand führender Bohrung dicht an die Gebäudewand anpressbar ist. Als ein geeigneter Kunststoff wird vorzugsweise ABS verwendet, das bei größerer Wandstärke im wesentlichen starr ist, aber bei geringer Wandstärke verformbar bzw. biegbar ist. Wichtig dabei ist, dass der innere Klemmkörper bei jedem auftretenden Verlauf der Bohrung durch die Wand mit einem umlaufenden Randabschnitt dicht und fest an die Wandoberfläche anpressbar ist.

Weiter ist erfindungsgemäß vorgesehen, dass mit der Innenseite des äußeren Klemmkörpers ein Lochrohr verbunden ist, das die Speedpipe in der Bohrung wenigstens über einen Teil ihrer Länge mit radialem Abstand umgibt und das bevorzugt aus demselben Material wie der innere Klemmkörper besteht. Das Lochrohr ist bevorzugt gelenkig mit dem äußeren Klemmkörper verbunden, so dass es bei an der Wand mit dem umlaufenden Randabschnitt dicht anliegendem Klemmkörper auf den jeweiligen Verlauf der Wandbohrung ausgerichtet werden kann. Das Lochrohr kann dabei in seinem unteren Bereich der Einbaulage geschlossen sein und in den darüber liegenden Bereichen kleine Löcher oder Schlitze haben, so dass die in das Lochrohr einzufüllende Dichtungssubstanz nicht wirkungslos in der Wandbohrung nach unten ablaufen kann.

Weiter sieht die Erfindung vor, dass der innere Klemmkörper einen rohrförmigen Abschnitt hat, durch den die Speedpipe durchführbar ist, und dass dieser rohrförmige Abschnitt in die Bohrung einsetzbar ist. Hierbei ist der rohrförmige Abschnitt vorteilhafterweise nach Art eines Dübels mit außen abstehenden Flügeln ausgebildet, wodurch dieser Abschnitt klemmend in die Bohrung einsetzbar ist.

Der innere Klemmkörper hat außerdem einen im unbelasteten Zustand im Winkel von etwa 90° zu dem rohrförmigen Abschnitt verlaufenden rahmenartigen Abschnitt, mit einem umlaufenden Rand, der dicht an die Gebäudewand anzupressen ist, wobei der rohrförmige Abschnitt und der rahmenartige Abschnitt durch biegbare Stege einstückig miteinander verbunden sind. Diese biegbaren Stege bestehen aus demselben Material wie der übrige innere Klemmkörper, haben jedoch eine so dünne Wandstärke, dass der Winkel zwischen dem rohrförmigen Abschnitt und dem rahmenartigen Abschnitt veränderbar ist, wobei diese beiden Abschnitte aufgrund ihrer größeren Wandstärke im wesentlichen starr sind.

Der rohrförmige Abschnitt setzt sich außerhalb der Bohrung querschnittlich U-förmig fort mit dem rahmenartigen Abschnitt zugewandter Öffnung, so dass die Speedpipe nach oben zu dem rahmenartigen Abschnitt hin gebogen werden kann. Der rahmenartige Abschnitt hat in einer bevorzugten Ausführungsform zwei Stegpaare, deren Stege so beabstandet sind, dass zwischen ihnen die Speedpipe hindurchgeführt und an dem oberen Stegpaar festgeklemmt werden kann. Hierzu kann das obere Stegpaar zwei Federarme mit einander zugewandten Nasen aufweisen, hinter denen die Speedpipe einklemmbar ist.

Der äußere Klemmkörper, der bevorzugt im wesentlichen die Form eines Tellers hat, dessen Rand dicht an die Gebäudewand angepresst wird, hat in einer bevorzugten Ausführungsform ein mittiges Loch zum Durchführen der Speedpipe und an der Außenseite beidseitig des Loches seitliche Führungen für ein vorzugsweise aus Metall bestehendes Plättchen, das mit einer entsprechend geformten Aussparung auf die Speedpipe aufschiebbar ist, um diese an dem äußeren Klemmkörper zu fixieren.

Die zunächst fließfähige, dann aufschäumende und schließlich erhärtende Füllsubstanz wird bevorzugt durch eine Durchgangsöffnung in dem äußeren Klemmkörper von außen in das Lochrohr eingefüllt, wozu ein kleiner Rohrstutzen ausgebildet sein kann.

Weitere Einzelheiten der Erfindung ergeben sich aus der nachfolgenden Beschreibung einer bevorzugten Ausführungsform sowie anhand der Zeichnungen. Dabei zeigen:
- Figur 1: eine Ausführungsform der Vorrichtung bei horizontaler Durchführung einer Speedpipe durch eine aus Hohlblocksteinen bestehende, angedeutete Wand;
- Figur 2: die Vorrichtung in einer anderen perspektivischen Ansicht;

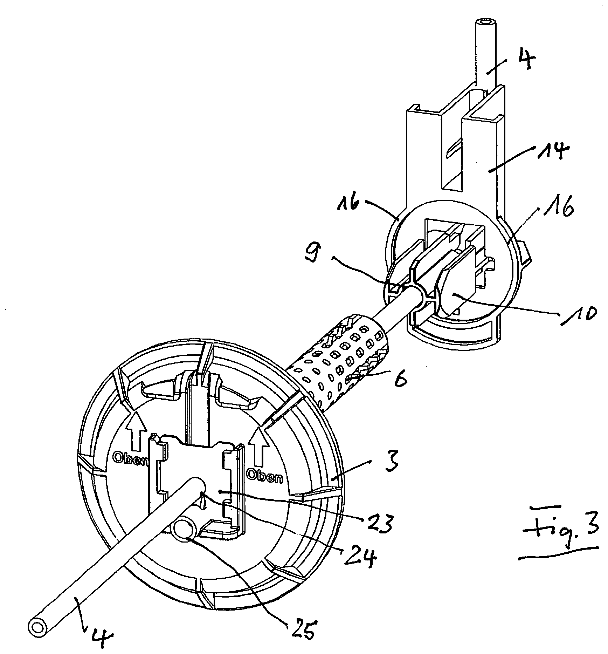

- Figur 3: eine weitere perspektivische Ansicht derselben Vorrichtung;

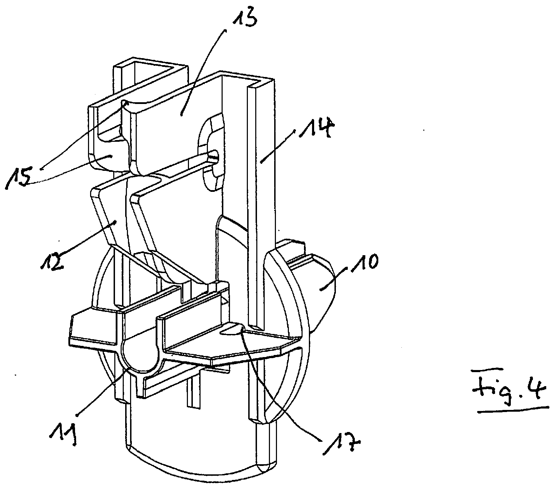

- Figur 4: den an der Gebäudeinnenseite anzuordnenden inneren Klemmkörper;
- Figur 5: den an der Gebäudeaußenseite anzuordnenden äußeren Klemmkörper in einer Innenansicht;

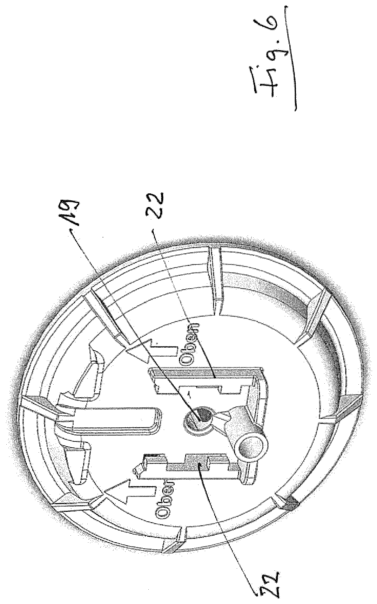

- Figur 6: den äußeren Klemmkörper in einer Außenansicht;
- Figur 7: eine Zusammenschau einer horizontalen und einer schrägen Wanddurchführung der erfindungsgemäßen Vorrichtung.

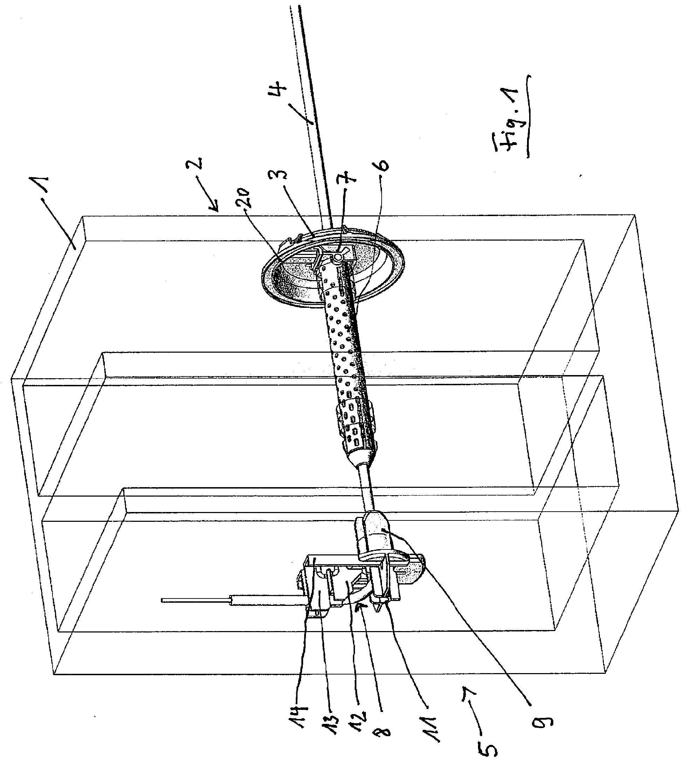

Figur 1 zeigt eine angedeutete Wand 1 aus schematisch dargestellten Hohlblocksteinen. An der Gebäudeaußenseite 2 liegt ein äußerer Klemmkörper 3 an, durch den eine Speedpipe 4 ins Innere 5 des Gebäudes eingeführt wird. In die zunächst leere Speedpipe 4 werden zu einem späteren Zeitpunkt Glasfasern eingeblasen.

Die Speedpipe 4 wird durch ein mit kleinen Löchern versehenes Lochrohr 6 hindurchgeführt, das gelenkig an einem innen angesetzten Rahmenteil 7 des äußeren Klemmkörpers 3 befestigt ist, so dass das Lochrohr 6 in der Darstellung der Figur 1 nach oben schwenkbar ist, wenn die Speedpipe 4 nicht - wie in Figur 1 - horizontal, sondern schräg aufwärts durch die Wand 1 hindurchgeführt werden soll. Das Lochrohr 6 umgibt die Speedpipe 4 mit einem radialen Abstand, wobei in den Zwischenraum zwischen der Speedpipe 4 und dem Lochrohr 6 von der Außenseite des äußeren Klemmkörpers her eine zunächst fließfähige, dann aufschäumende und erhärtende Füllsubstanz eingefüllt wird, die aus den Löchern austritt und den Zwischenraum zwischen der nicht dargestellten Wandbohrung und dem Lochrohr 6 ausfüllt. Das Lochrohr 6 verengt sich an seinem freien Ende, so dass dort die Füllsubstanz nicht im nennenswerten Umfang austreten kann.

Die Speedpipe 4 verläuft zu einem inneren Klemmkörper 8, der einen rohrförmigen Abschnitt 9 hat, der von der Innenseite der Gebäudewand 1 aus in die Wandbohrung eingesetzt wird. Von der Außenseite des rohrförmigen Abschnitts 9 stehen Flügel 10 ab, so dass der rohrförmige Abschnitt 9 nach Art eines Dübels klemmend in die Wandbohrung eingesetzt werden kann.

Die Speedpipe 4 wird durch den rohrförmigen Abschnitt 9 zu einem anschließenden rinnenförmigen Abschnitt 11 geführt, aus dem die Speedpipe 4 unter Einhaltung eines Mindestbiegeradius nach oben austritt, um zwischen zwei Stegpaare 12, 13 aufgenommen zu werden, die von einem rahmenartigen Abschnitt 14 des inneren Klemmteils 8 abstehen. Die Speedpipe 4 ist in dem oberen Stegpaar 13 hinter einander zugewandten Nasen 15 der als Federarme wirkenden Stege des Stegpaars 13 festgeklemmt.

Der rahmenartige Abschnitt 14 liegt mit seinem Rand 16 in der Einbaulage fest an der Gebäudewand an und dichtet die Wandbohrung ab.

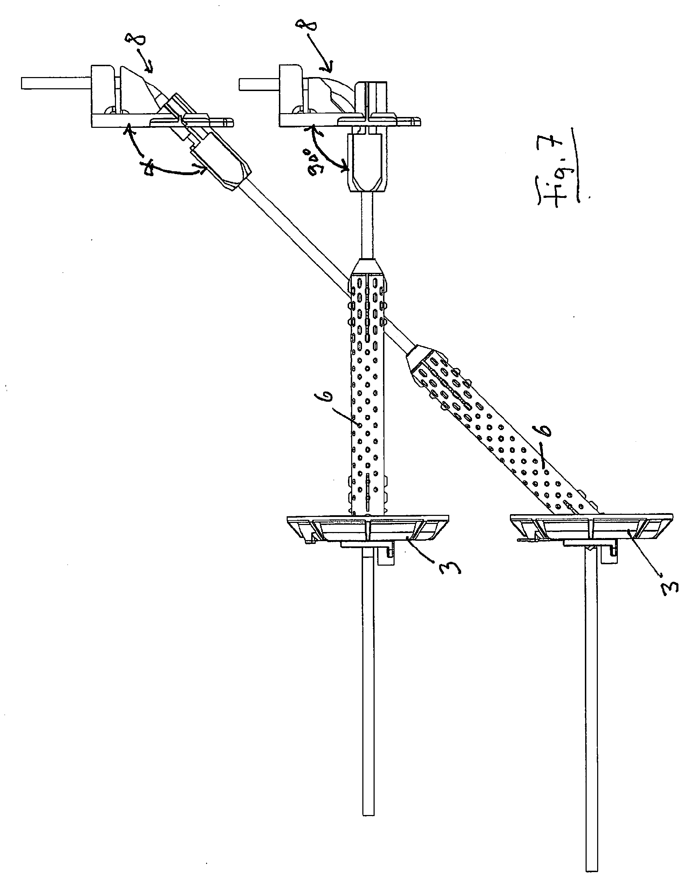

Der rohrförmige Abschnitt 9 mit der anschließenden querschnittlich U-förmigen Verlängerung 11 ist aufgrund seiner Wandstärke im wesentlichen starr ebenso wie der rahmenförmige Abschnitt 14. Diese beiden weitgehend starren Abschnitte des inneren Klemmkörpers 8 sind durch Verbindungsstege (bei 17) miteinander verbunden, wobei diese Verbindung aufgrund geringerer Wandstärke verformbar bzw. biegbar ist. Dies hat zur Folge, dass der im unbelasteten Zustand und bei horizontaler Wanddurchführung bestehende Winkel von 90° zwischen dem rohrförmigen Abschnitt 9 und dem rahmenartigen Abschnitt 14 vergrößert werden kann, wenn die Wandbohrung zur Gebäudeinnenseite hin schräg nach oben verläuft, wie in Figur 7 durch den Winkel α angedeutet ist. Figur 7 zeigt auch, dass durch die schwenkbare Befestigung des Lochrohres 6 ein entsprechender Winkel an dem äußeren Klemmkörper 3 eingestellt werden kann.

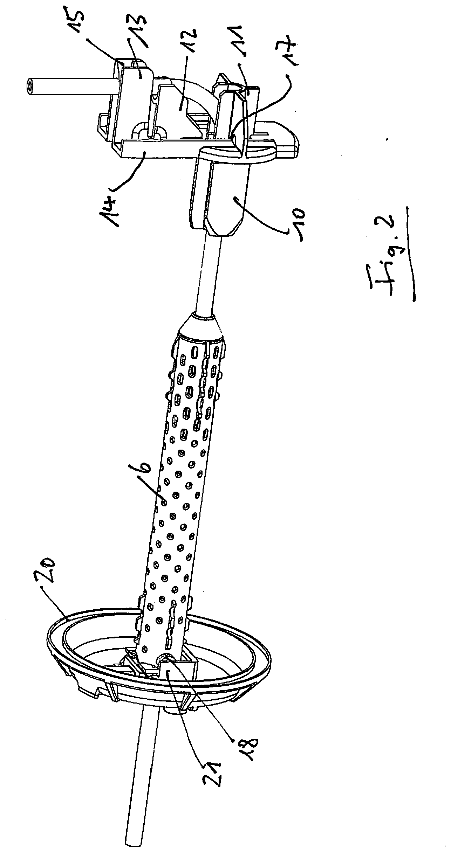

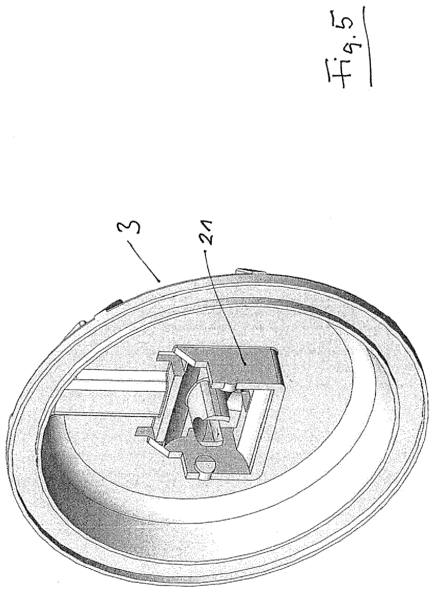

Wie die Figuren 2 und 5 zeigen, ist an der Innenseite des im wesentlichen napfförmigen äußeren Klemmkörpers 3 eine rahmenförmige Halterung 7 bzw. 21 für das Lochrohr 6 angeformt, in der das Lochrohr 6 mit zapfenförmigen Ansätzen 18 schwenkbar befestigt ist. Die Speedpipe tritt durch ein mittiges Loch 19 durch den äußeren Klemmkörper 3 hindurch und in das Lochrohr 6 hinein. Der äußere Klemmkörper 3 liegt mit seinen umlaufenden Rand 20 dicht an der Gebäudewand an.

Neben dem Loch 19, durch das die Speedpipe 4 geführt wird, befinden sich zwei seitliche Führungen 22 für ein Metallplättchen 23, das mit einem Randausschnitt 24 fest auf die Speedpipe 4 aufgeschoben wird, um die Speedpipe an dem äußeren Klemmkörper 3 zu fixieren.

Unterhalb des Lochs 19 und des Metallplättchens 23 ist ein kleiner Rohrstutzen 25 angeformt, dessen Öffnung durch den Klemmkörper 3 hindurchführt und in das Innere des Lochrohres 6 einmündet. Durch diesen Rohrstutzen 25 wird die aufschäumende und dann erhärtende Dichtungssubstanz in das Lochrohr eingefüllt, die die Wandbohrung abdichtet.

Aufgrund der Verformbarkeit des inneren Klemmkörpers 8 und der gelenkigen Verbindung des Lochrohrs 6 an dem äußeren Klemmkörper 3 ist die Vorrichtung zum Befestigen und Abdichten einer Speedpipe in einer im beliebigen Winkel durch eine Wand führenden Wandbohrung geeignet.

Es wird betont, dass die Erfindung nicht auf die beschriebenen und dargestellten Ausführungsformen beschränkt ist. Die Erfindung wird durch die Ansprüche definiert.

## Patentansprüche

1. Vorrichtung zum Durchführen wenigstens einer Leitung durch eine durch eine Gebäudewand führende Wandbohrung, mit einem die Bohrung an der Gebäudeaußenseite überdeckfähigen, an der Gebäudewand anliegbaren äußeren Klemmkörper, der ein Loch zum Durchführen der Leitung hat,
und einem die Bohrung an der Gebäudeinnenseite überdeckfähigen, an der Gebäudewand anliegbaren inneren Klemmkörper, durch den die Leitung hindurchführbar ist,
wobei beide Klemmkörper Mittel zum Festklemmen der durch sie hindurchgeführten Leitung haben,
wobei die Leitung wenigstens eine Speedpipe (4) ohne ein sie umgebendes Schutzrohr sein kann,
wobei der innere Klemmkörper (8) einen biegbaren Abschnitt (17) hat, wobei mit dem äußeren Klemmkörper (3) an dessen Innenseite ein mit einer Vielzahl von kleinen Löchern versehenes Lochrohr (6) verbunden ist, das die Speedpipe (4) in der Bohrung wenigstens über einen Teil ihrer Länge mit radialem Abstand umgeben kann, und
wobei die Klemmkörper (3, 8) sowohl bei horizontaler als auch im Winkel hierzu durch die Gebäudewand (1) führender Bohrung dicht an die Gebäudewand anpressbar sind,
**dadurch gekennzeichnet,**
**dass** der innere Klemmkörper (8) einen rohrförmigen Abschnitt (9), durch den die Speedpipe (4) durchführbar ist und der in die Bohrung einsetzbar ist, und einen im unbelasteten Zustand im Winkel von 90° dazu verlaufenden rahmenartigen Abschnitt (14) aufweist, der dicht an die Gebäudewand anpressbar ist,
wobei die beiden Abschnitte (9, 14) durch biegbare Stege (17) einstückig miteinander verbunden sind, und
**dass** sich der rohrförmige Abschnitt (9) außerhalb der Bohrung querschnittlich U-förmig (11) fortsetzt, sodass die Speedpipe (4) nach oben austreten kann.

2. Vorrichtung zum Durchführen einer Speedpipe nach Anspruch 1,
**dadurch gekennzeichnet**,
der innere Klemmkörper (8) aus einem thermoplastischen Kunststoff wie ABS besteht, der bei dünner Wandstärke verformbar bzw. biegbar ist.

3. Vorrichtung nach Anspruch 1,
**dadurch gekennzeichnet,**
**dass** der rohrförmige Abschnitt (9) nach Art eines Dübels mit außen abstehenden Flügeln (10) ausgebildet ist, wodurch er klemmend in die Bohrung einsetzbar ist.

4. Vorrichtung nach einem der Ansprüche 1 bis 3,
**dadurch gekennzeichnet,**
**dass** der rahmenartige Abschnitt (14) beabstandete Stegpaare (12, 13) aufweist, zwischen denen die Speedpipe (4) hindurchgeführt und festgeklemmt werden kann.

5. Vorrichtung nach Anspruch 4,
**dadurch gekennzeichnet,**
**dass** ein Stegpaar (13) zwei Federarme mit einander zugewandten Nasen (15) aufweist, hinter denen die Speedpipe (4) einklemmbar ist.

6. Vorrichtung nach einem der Ansprüche 1 bis 5,
**dadurch gekennzeichnet,**
**dass** der äußere Klemmkörper (3) an der Außenseite zwei seitliche Führungen (22) für ein vorzugsweise aus Metall bestehendes Plättchen (23) enthält, mit dem die hindurchgeführte Speedpipe (4) fixierbar ist.

7. Vorrichtung nach einem der Ansprüche 1 bis 6,
**dadurch gekennzeichnet,**
**dass** der äußere Klemmkörper (3) eine Durchgangsöffnung (25) aufweist, durch die eine zunächst fließfähige, dann expandierende und erhärtende Füllsubstanz in das Lochrohr (6) einfüllbar ist.

8. Vorrichtung nach einem der Ansprüche 1 bis 7,
**dadurch gekennzeichnet,**
**dass** das Lochrohr (6) in seinem in der Einbaulage unteren Bereich keine Löcher hat.

9. Vorrichtung nach einem der Ansprüche 1 bis 8,
**dadurch gekennzeichnet,**
**dass** auch der äußere Klemmkörper (3) und das Lochrohr (6) aus einem thermoplastischen Kunststoff wie ABS bestehen.

## Claims

1. Apparatus for passing at least one conduit through a wall opening leading through a building wall with an outer clamping member, which may be engaged with the building wall and is adapted to overlie the opening on the outer side of the building and has a hole for the passage of the conduit, and an inner clamping body, which is engageable with the building wall and is adapted to overlie the opening on the outer side of the building, through which the conduit may be passed, whereby the two clamping members have means for clamping the conduit passed through them, wherein the conduit can be at least one speedpipe (4) without a protective tube surrounding it, wherein the inner clamping member (8) has a flexible section (17), wherein connected to the inner side of the outer clamping member (3) there is an apertured tube, which is provided with a plurality of small holes and which can surround the speedpipe (4) in the opening at least over a proportion of its length with a radial spacing and wherein the clamping members (3, 8) may be pressed tightly against the building wall when the opening extends horizontally and also at an angle thereto through the building wall (1), **characterised in that** the inner clamping member (8) has a tubular section (9), through which the speedpipe (4) may be passed and which is insertable into the opening and has a frame-like section (14) extending in the unloaded state at an angle of 90° thereto, which may be pressed tightly against the building wall, wherein the two sections (9, 14) are integrally connected together by flexible webs (17) and that the tubular section (9) continues outside the opening with a U-shaped cross-section (11) so that the speedpipe (4) can pass out upwardly.

2. Apparatus for passing a speedpipe as claimed in Claim 1, **characterised in that** the inner clamping member (8) consists of a thermoplastic plastic material, such as ABS, which, with a thin wall thickness, is deformable or flexible.

3. Apparatus as claimed in Claim 1, **characterised in that** the tubular section (9) is constructed in the manner of a dowel with outwardly projecting wings (10), whereby it may be inserted jammingly into the opening.

4. Apparatus as claimed in one of Claims 1 to 3, **characterised in that** the frame-like section (14) has spaced pairs of webs (12, 13), between which the speedpipe (4) can be passed and clamped.

5. Apparatus as claimed in Claim 4, **characterised in that** one pair of webs (13) has two spring arms with lugs directed towards one another, behind which the speedpipe (4) may be clamped.

6. Apparatus as claimed in one of Claims 1 to 5, **characterised in that** the outer clamping member (3) includes two lateral guides (22) on the outer surface for a small plate, consisting preferably of metal, with which the speedpipe (4), which has been passed through, may be fixed in position.

7. Apparatus as claimed in one of Claims 1 to 6, **characterised in that** the outer clamping member (3) has a through opening (25), through which a filler, which is initially flowable and then expands and sets, may be introduced into the apertured tube (6).

8. Apparatus as claimed in one of Claims 1 to 7, **characterised in that** the apertured tube (6) has no holes in its lower region in the installed position.

9. Apparatus as claimed in one of Claims 1 to 8, **characterised in that** the outer clamping member (3) and the apertured tube (6) also consist of a thermoplastic plastic material, such as ABS.

## Revendications

1. Dispositif de passage d'au moins une conduite par un perçage de paroi traversant une paroi de bâtiment, avec un corps de serrage extérieur pouvant reposer contre la paroi de boîtier, capable de recouvrir le perçage au niveau du côté extérieur de bâtiment qui présente un trou pour le passage de la conduite,
et un corps de serrage intérieur pouvant reposer contre la paroi de bâtiment, capable de recouvrir le perçage au niveau du côté intérieur de bâtiment, que peut traverser la conduite,
dans lequel les deux corps de serrage présentent des moyens pour le serrage de la conduite les traversant,
dans lequel la conduite peut être au moins un speedpipe (4) sans un tube de protection l'entourant,
dans lequel le corps de serrage (8) intérieur présente une section (17) pliable,
dans lequel un tube à trous (6) pourvu d'une pluralité de petits trous est relié au corps de serrage (3) extérieur au niveau de son côté intérieur, lequel tube peut entourer le speedpipe (4) dans le perçage au moins sur une partie de sa longueur à une distance radiale, et
dans lequel les corps de serrage (3, 8) peuvent être pressés non seulement en cas de perçage horizontal mais également en angle par rapport à celui traversant la paroi de bâtiment (1) de manière étanche contre la paroi de boîtier,
**caractérisé en ce**
**que** le corps de serrage (8) intérieur présente une section (9) tubulaire, que peut traverser le speedpipe (4) et qui est insérable dans le perçage, et une section (14) de type cadre s'étendant dans l'état non sollicité selon un angle de 90° par rapport à celui-ci qui peut être pressée de manière étanche contre la paroi de bâtiment,
dans lequel les deux sections (9, 14) sont reliées entre elles d'un seul tenant par des nervures (17) pliables, et
**que** la section (9) tubulaire se prolonge en dehors du perçage en section transversale en forme de U (11) de sorte que le speedpipe (4) puisse sortir vers le haut.

2. Dispositif de passage d'un speedpipe selon la revendication 1,
**caractérisé en ce que**
le corps de serrage (8) intérieur se compose d'une matière thermoplastique telle que de l'ABS qui est déformable ou pliable en cas d'épaisseur de paroi mince.

3. Dispositif selon la revendication 1,
**caractérisé en ce**
**que** la section (9) tubulaire est réalisée comme une cheville avec des ailes (10) dépassant à l'extérieur, par quoi elle peut être insérée par serrage dans le perçage.

4. Dispositif selon l'une quelconque des revendications 1 à 3,
**caractérisé en ce**
**que** la section (14) de type cadre présente des paires de nervures (12, 13) espacées, entre lesquelles le speedpipe (4) peut traverser et être serré.

5. Dispositif selon la revendication 4,
**caractérisé en ce**
**qu'**une paire de nervures (13) présente deux bras de ressort avec des nez (15) tournés l'un vers l'autre, derrière lesquels le speedpipe (4) peut être serré.

6. Dispositif selon l'une quelconque des revendications 1 à 5,
**caractérisé en ce**
**que** le corps de serrage (3) extérieur contient au niveau du côté extérieur deux guidages (22) latéraux pour une petite plaque (23) se composant de préférence de métal, avec laquelle le speedpipe (4) traversé peut être fixé.

7. Dispositif selon l'une quelconque des revendications 1 à 6,
**caractérisé en ce**
**que** le corps de serrage (3) extérieur présente une ouverture de passage (25), par laquelle une substance de remplissage tout d'abord pouvant s'écouler, puis en expansion et durcissant peut être remplie dans le tube à trous (6).

8. Dispositif selon l'une quelconque des revendications 1 à 7,
**caractérisé en ce**
**que** le tube à trous (6) ne présente aucun trou dans sa zone inférieure dans la position d'installation.

9. Dispositif selon l'une quelconque des revendications 1 à 8,
**caractérisé en ce**
**que** le corps de serrage (3) extérieur et le tube à trous (6) se composent également d'une matière thermoplastique telle que de l'ABS.
